# EUROPÄISCHE PATENTSCHRIFT

(11) **EP 1 124 117 B1**
(45) Veröffentlichungstag und Bekanntmachung des Hinweises auf die Patenterteilung: **15.09.2004**
(21) Anmeldenummer: 01101407.3
(22) Anmeldetag: 23.01.2001
(51) Int. Cl.: G01F 23/00

(54) **Verfahren zur Überprüfung der Funktionsfähigkeit eines elektronischen Füllstandssensors**
Method of verifying the operation of an electronic level indicator
Procédé pour vérifier le fonctionnement d'un capteur électronique de niveau

(30) Priorität: 10.02.2000 DE 10005814
(43) Veröffentlichungstag der Anmeldung: 16.08.2001
(73) Patentinhaber: Bedia Motorentechnik GmbH, 91227 Leinburg (DE); MAN Nutzfahrzeuge Aktiengesellschaft, 80995 München (DE)
(72) Erfinder: Virnich, Ulrich, Dipl.-Ing., 92348 Berg (DE); Sprickmann Kerkernick, Stefan, Dipl.-Ing., 90403 Nürnberg (DE); Merz, Jürgen, Dipl.-Ing., 85757 Karlsfeld (DE); Kalass, Rainer, Dipl.-Ing., 91189 Rohr (DE); Veicht, Johannes, Dipl.-Ing., 80333 München (DE); Eisermann, Günter, Dipl.-Ing., 85758 Karlsfeld (DE); Kreutmair, Josef, Dipl.-Ing., 85276 Pfaffenhofen (DE); Rapp, Stefan, Dipl.-Ing., 81479 München (DE)
(74) Vertreter: Hafner, Dieter, Dr.rer.nat., Dipl.-Phys.

(56) Entgegenhaltungen:
- EP-A- 0 151 753
- US-A- 4 306 525
- US-A- 4 611 287

## Beschreibung

Die Erfindung betrifft ein Verfahren zur Überprüfung der Funktionsfähigkeit eines elektronischen Füllstandsensors zur Messung eines Ölpegels in Verbrennungsmotoren mit den Ölpegel beeinflussenden bewegten Elementen sowie einem Abgasrrückführungssystem Angesprochen. sind dabei insbesondere Verbrennungsmotoren, d. h. deren Ölwannen, Getriebe, Kühlsysteme und dgl, in welchen Motoröle, Getriebeöle, Kühlflüssigkeiten und dgl. gelagert sind, die beim Betrieb des Motors, Getriebes oder Kühlsystems in andere Maschinenbereiche hochgepumpt werden.

Elektronische Füllstandsensoren zur Messung des Flüssigkeitspegels beispielsweise von Motorölen sind bekannt. Sie bestehen aus kapazitiven Elementen, zwischen denen sich die Flüssigkeit einlagern kann und je nach Füllstandshöhe zwischen den kapazitiven Elementen das elektrische Feld aufgrund der die Dielektrizitätskonstante der Flüssigkeit beeinflußt. Dadurch ist es möglich, über Kapazitätsänderung Füllstandshöhen zu messen.

Kapazitive Meßeinrichtungen zur Feststellung eines Füllstandes eines Behälters gehen beispielsweise aus dem deutschen Patent 197 54 093.7 hervor. Die dort dargestellten kapazitiven Meßeinrichtungen bestehen gemäß einer Ausführungsform aus einem konzentrischen rohrartigen Gebilde, in welchem die

Flüssigkeit hochsteigt. Kommt es aufgrund von Verunreinigungen oder dgl. zu teilweisen Verstopfungen oder zu einem Zusetzen des Sensorrohres, dann kann es zu Meßresultatsverfälschungen kommen.

Der Erfindung liegt die Aufgabe. zugrunde, ein Verfahren zur Überprüfung der Funktionsfähigkeit eines elektronischen Füllstandssensors anzugeben.

Diese Aufgabe wird durch die Verfahrensschritte a - f des Patentanspruches 1 gelöst. Vorteilhafte Varianten ergeben sich aus den Verfahrensunteransprüchen.

Als Kern des Verfahrens wird es angesehen, durch den Ablauf von Verfahrensschritten sicherzustellen, daß der Füllstandsensor des Meßsystems unbeeinträchtigt durch Flüssigkeitsverschmutzung, insbesondere Ölverdickung oder Ölverschlammung arbeitet. Dies ist insbesondere für Verbrennungsmotoren von Interesse, die den europäischen Abgasnormen unterfallen. Ab Jahresbeginn 2000 tritt eine neue Euro3-Norm in Kraft. Weiterführende Normen Euro4 und Euro5 sind bereits angedacht und in Vorbereitung. Einschließlich der sogenannten Euro3-Norm für Verbrennungsmotoren lassen sich die maximal zulässigen Abgaswerte noch durch rein konstruktive Maßnahmen an den Verbrennungskraftmaschinen erreichen. Die in Vorbereitung befindlichen Normen Euro4 oder Euro5 sehen aber zum Teil Maßnahmen der sogenannten Abgasrückführung in den Motor vor. Dies bedeutet, daß abgasbedingte Rückstände in den Ölkreislauf von Motoren gelangen, wo sie längerfristig zu einer Ölverdickung oder Ölverschlammung führen können, die die ordnungsgemäße Funktion von elektronischen kapazitiven Füllstandsensoren beeinträchtigen kann.

Hier setzt das erfindungsgemäße Verfahren ein, bei welchem zunächst eine erste Flüssigkeitspegelmessung vor dem Bewegungsstart der Elemente, bei einem Motor vor dem Bewegungsstart der Ölpumpe durchgeführt wird. Das Resultat dieser ersten Flüssigkeitspegelmessung wird dann automatisch abgespeichert. Sodann wird der Motor gestartet, d. h. die Elemente, die den Füllstand beeinflussen können, beginnen sich zu bewegen. Danach wird eine zweite Flüssigkeitspegelmessung durchgeführt.

Die Resultate der ersten und der zweiten Messung werden miteinander verglichen und ausgewertet. Daraufhin wird eine erste Anzeige aktiviert, wenn der Meßwert der zweiten Pegelmessung den ersten Meßwert nicht um einen vorgebbaren Wert unterschreitet. Eine zweite Anzeige wird eingeschaltet, wenn die Frühstandsdifferenz einen vorgebbaren Wert überschreitet.

Die dem Verfahren zugrundeliegende Überlegung basiert darauf, durch eine zweite Messung zu überprüfen, ob der Füllstandsensor richtig mißt. Wird nämlich ein Motor oder Pumpen oder dgl., d. h. bewegte Elemente, die den Flüssigkeitspegel beeinflussen, in Betrieb genommen, muß der Pegelstand im Behälter absinken. Sinkt er nicht ab, dann läßt dies darauf schließen, daß die Funktionsfähigkeit des Sensors beeinträchtigt ist, d. h. beispielsweise der von der Flüssigkeit durchflossene Bereich des Sensors verstopft ist, so daß darin befindliches Öl nicht abfließen kann und damit das Meßergebnis verfälscht.

Je nach Art und Ausbildung sowie abhängig von weiteren Faktoren wie beispielsweise Temperatur der Flüssigkeit, Viskosität der Flüssigkeit und dgl. ist es zweckdienlich, wenn nach dem Bewegungsstart der Elemente, d. h. nach dem Anlassen des Motors eine vorgebbare Zeitspanne bis zur Durchführung der zweiten Flüssigkeitspegelmessung zugewartet wird. Dies geschieht durch einen automatischen Timer, der von den genannten Faktoren beeinflußt werden kann.

Es ist ferner vorteilhaft, die Resultate von beiden Flüssigkeitspegelmessungen in dem Meßwertspeicher abzulegen. Dann kann später auf die Resultate zurückgegriffen werden, Meßwertreihen können ausgedruckt oder angezeigt werden, um eine Füllstandsdiagnose durchzuführen. Details finden sich in den Ansprüche 4 - 6.

Es kann ferner zweckdienlich sein, über den Ruhezustand der bewegten Elemente, insbesondere des Motores Werte abzuspeichern, beispielsweise die Stillstandszeit, die Temperatur, die Viskosität, die Neigung des Behälters, insbesondere der Ölwanne des Verbrennungsmotors und dgl. Derartige Werte können dazu verwendet werden, um das Validierungsverfahren zu verfeinern und zu verbessern.

Sämtliche Verfahrensschritte des Anspruches 1 sowie von Unteransprüchen lassen sich über einen Prozessor steuern, so daß bei der Anwendung des Verfahrens in einem Kraftfahrzeug beim Starten des Motors zunächst die erste Messung durchgeführt wird, dann automatisch der Motor gestartet wird und sodann automatisch nach einer gewissen Zeit und gegebenenfalls Erfassung weiterer Werte die zweite Messung durchgeführt wird.

Die Erfindung ist anhand eines Ausführungsbeispiels in den Zeichnungsfiguren näher erläutert. Diese zeigen:
- Fig. 1:: einen kapazitiven Flüssigkeitspegelsensor, der in eine Flüssigkeit mit einem Ruhepegel eintaucht sowie
- Fig. 2:: einen Sensor gemäß 1, bei welchem der Ruhepegel der Flüssigkeit auf einen Betriebspegel abgesunken ist.

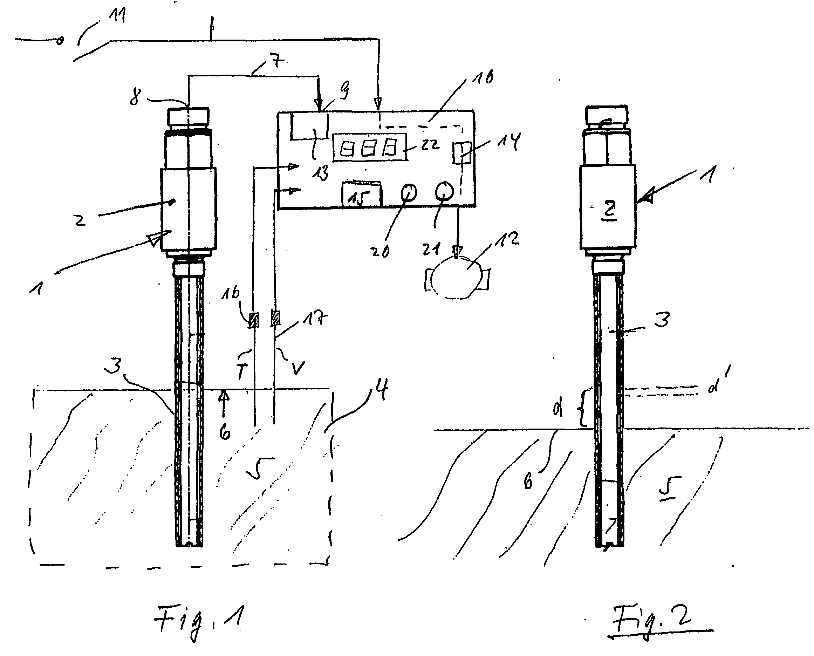

Im einzelnen ist in Fig. 1 ein Füllstandsensor 1 dargestellt, der aus einem Sensorkopf 2 und einer kapazitiven Sensoranordnung 3 besteht. In einem Behälter 4 befindet sich eine Flüssigkeit, beispielsweise Öl 5. Der Flüssigkeitspegel 6 soll in Fig. 1 ein "Ruhepegel" sein.

Über eine Leitung 7 ist der Ausgang 8 des Sensorkopfes 2 mit einem Eingang 9 einer elektronischen Auswerte- und Anzeigeschaltung 10 verbunden. Wird über einen Anlaßschalter 11 versucht, den Anlassermotor 12 eines Dieselmotors zu starten, so wird zunächst die Schaltung 10 aktiviert und der am Eingang 9 anliegende Meßwert einer ersten Flüssigkeitspegelmessung in einen Meßwertspeicher 13 eingelesen. Sodann wird der Anlassermotor 12 des Verbrennungsmotors gestartet. Über einen Prozessor 15 wird sodann eine zweite Flüssigkeitspegelmessung initiiert, wobei durch eine Verzögerungsschaltung 14 eine gewisse Zeitspanne zugewartet wird, die beispielsweise abhängig ist von der Temperatur der Flüssigkeit, die durch einen Temperaturmeßstab 16 und von der Viskosität V der Flüssigkeit 5, die von einem Viskosemeter 17 erfaßt wird. Auch der zweite Meßwert wird im Meßwertspeicher 13 abgelegt.

Im Prozessor 15 werden sodann die beiden Meßwerte verglichen und je nachdem, ob ein Differenzwert über- oder unterschritten wird, eine Bestätigungsanzeige oder eine Warnanzeige 20, 21 aktiviert. Über ein Display 22 ist es ferner möglich, unterschiedliche erfaßte Meßwerte wie beispielsweise das Resultat der ersten Pegelmessung, das Resultat der zweiten Pegelmessung, die Flüssigkeitstemperatur, die Stillstandszeit des Motors, die Viskosität des Öls, die Außentemperatur, die Neigung des Fahrzeuges und dgl. mitanzuzeigen, wozu gegebenenfalls weitere Sensoren vorgesehen werden, die in der Zeichnungsfigur aus Übersichtlichkeitsgründen nicht im einzelnen dargestellt sind.

Fig. 2 zeigt entsprechend Fig. 1 den Sensor. Der Flüssigkeitspegel 6 der Flüssigkeit 5 ist mittlerweile nach einer gewissen Motorlaufzeit abgesunken, und zwar um einen Differenzwert d. Die Schaltung 10 erkennt den Differenzwert d als ausreichend für eine ordnungsgemäß Sensorfunktion, wodurch die Anzeige aktiviert wird, die den Füllstand verifiziert. Sinkt allerdings der Flüssigkeitspegel nicht oder nur um einen geringen Betrag d' ab, wie er in Fig. 2 angedeutet ist, dann registriert die Schaltung 10 eine Fehlfunktion des Füllstandsensors 1 und wird eine Warnleuchte aktivieren.

## Patentansprüche

1. Verfahren zur Überprüfung der Funktionsfähigkeit eines elektronischen Füllstandsensors zur Messung eines Ölpegels in Verbrennungsmotoren mit den Ölpegel beeinflussenden bewegten Elementen sowie einem Abgasrückführungssystem,
mit folgenden Verfahrensschritten:
a) Durchführung einer ersten Ölpegelmessung vor dem Bewegungsstart der Elemente;
b) Abspeichern des Resultates der ersten Ölpegelmessung in einem Meßwertspeicher;
c) Bewegungsstart der Elemente, insbesondere Starten des Motors;
d) Durchführung einer zweiten Ölpegelmessung;
e) elektronischer Vergleich des abgespeicherten Resultates der ersten Ölpegelmessung mit dem Resultat der zweiten Ölpegelmessung, elektronische Auswertung des Vergleiches;
f) Aktivierung einer ersten Anzeige als Hinweis auf eine Fehlfunktion des Füllstandssensors, wenn die bei der ersten und zweiten Pegelmessung ermittelte Füllstandsdifferenz einen vorgebbaren Wert unterschreitet oder nicht überschreitet, oder Aktivierung einer zweiten Anzeige als Hinweis auf eine ordnungsgemäße Funktion des Füllstandsensors, wenn die Füllstandsdifferenz einen vorgebbaren Wert überschreitet oder nicht unterschreitet.

2. Verfahren nach Anspruch 1,
**dadurch gekennzeichnet, daß**
nach dem Bewegungsstart der Element, insbesondere nach dem Starten des Motors eine vorgebbare Zeitspanne bis zur Durchführung der zweiten Flüssigkeitspegelmessung verstreicht.

3. Verfahren nach den Ansprüchen 1 oder 2,
**dadurch gekennzeichnet, daß**
das Resultat der zweiten Flüssigkeitspegelmessung in dem Meßwertspeicher abgespeichert wird.

4. Verfahren nach einem der vorhergehenden Ansprüche,
**dadurch gekennzeichnet, daß**
Resultatreihen von ersten und zweiten Flüssigkeitspegelmessungen in dem Meßwertspeicher abgespeichert werden.

5. Verfahren nach einem der vorhergehenden Ansprüche,
**dadurch gekennzeichnet, daß**
Reihen von ermittelten Differenzwerten in dem Meßwertspeicher abgespeichert werden.

6. Verfahren nach den beiden vorhergehenden Ansprüchen,
**dadurch gekennzeichnet, daß**
die Meßwertreihen visualisiert werden.

7. Verfahren nach einem der vorhergehenden Ansprüche,
**dadurch gekennzeichnet, daß**
die der ersten Flüssigkeitspegelmessung vorhergehende Stillstandzeit der bewegten Elemente, insbesondere des Verbrennungsmotors erfaßt wird.

8. Verfahren nach einem der vorhergehenden Ansprüche,
**dadurch gekennzeichnet, daß**
die Temperatur der Flüssigkeit, insbesondere des Motoröls erfaßt wird.

9. Verfahren nach einem der vorhergehenden Ansprüche,
**dadurch gekennzeichnet, daß**
die Viskosität der Flüssigkeit erfaßt wird.

10. Verfahren nach einem der vorhergehenden Ansprüche,
**dadurch gekennzeichnet, daß**
die Neigung des Behälters, insbesondere des Verbrennungsmotors erfaßt wird.

11. Verfahren nach einem der vorhergehenden Ansprüche,
**dadurch gekennzeichnet, daß**
die Bewegungsgeschwindigkeit insbesondere die Drehzahl der bewegten Elemente erfaßt wird.

12. Verfahren nach einem der vorhergehenden Ansprüche,
**dadurch gekennzeichnet, daß**
die Zeitspanne zwischen der ersten und der zweiten Pegelmessung abhängig von der ermittelten Stillstandszeit und/oder Motoröltemperatur und/oder Viskosität und/oder Neigung des Behälters und/oder Geschwindigkeit der bewegten Elemente ist.

13. Verfahren nach einem der vorhergehenden Ansprüche,
**dadurch gekennzeichnet, daß**
die Verfahrensschritte a) - f) durch einen Prozessor gesteuert werden.

14. Verfahren nach einem der vorhergehenden Ansprüche,
**dadurch gekennzeichnet, daß**
die erste Anzeige eine Warnanzeige ist.

15. Verfahren nach einem der vorhergehenden Ansprüche,
**dadurch gekennzeichnet, daß**
die zweite Anzeige eine das Resultat der ersten Flüssigkeitspegelmessung bestätigende Anzeige ist.

16. Verfahren nach einem der vorhergehenden Ansprüche,
**dadurch gekennzeichnet, daß**
das Verfahren in einem Verbrennungsmotor, insbesondere Dieselmotor angewandt wird.

17. Verfahren nach einem der vorhergehenden Ansprüche,
**dadurch gekennzeichnet, daß**
der Verbrennungsmotor ein Abgasrückführungssystem umfaßt.

## Claims

1. Method of checking the operability of an electronic filling level sensor for measuring an oil level in internal combustion engines having moving elements, which influence the oil level, as well as a waste gas return system, said method having the following method steps:
a) effecting a first oil level measurement prior to the elements starting to move;
b) storing the result of the first oil level measurement in a measurement value storage unit;
c) starting the elements to move, or more especially starting the engine;
d) effecting a second oil level measurement;
e) electronically comparing the stored result of the first oil level measurement with the result of the second oil level measurement, electronically evaluating the comparison;
f) activating a first display as an indication of a faulty operation of the filling level sensor when the filling level difference, determined during the first and second level measurements, falls below or does not exceed a prescribable value, or activating a second display as an indication of a correct operation of the filling level sensor when the filling level difference exceeds or does not fall below a prescribable value.

2. Method according to claim 1, **characterised in that**, subsequent to the elements starting to move, more especially subsequent to the engine starting, a prescribable time interval elapses until the second fluid level measurement is effected.

3. Method according to claims 1 or 2, **characterised in that** the result of the second fluid level measurement is stored in the measurement value storage unit.

4. Method according to one of the preceding claims, **characterised in that** series of results from first and second fluid level measurements are stored in the measurement value storage unit.

5. Method according to one of the preceding claims, **characterised in that** series of determined differential values are stored in the measurement value storage unit.

6. Method according to the two preceding claims, **characterised in that** the series of measurement values are visualised.

7. Method according to one of the preceding claims, **characterised in that** the time when the moving elements are stationary, more especially the time when the internal combustion engine is stationary, is detected, said time preceding the first fluid level measurement.

8. Method according to one of the preceding claims, **characterised in that** the temperature of the fluid, more especially of the engine oil, is detected.

9. Method according to one of the preceding claims, **characterised in that** the viscosity of the fluid is detected.

10. Method according to one of the preceding claims, **characterised in that** the inclination of the container, more especially of the internal combustion engine, is detected.

11. Method according to one of the preceding claims, **characterised in that** the velocity of movement, more especially the rotational speed, of the moving elements is detected.

12. Method according to one the preceding claims, **characterised in that** the time interval between the first level measurement and the second level measurement is dependent on the determined stationary time and/or engine oil temperature and/or viscosity and/or inclination of the container and/or velocity of the moving elements.

13. Method according to one of the preceding claims, **characterised in that** the method steps a) - f) are controlled by a processor.

14. Method according to one of the preceding claims, **characterised in that** the first display is a warning display.

15. Method according to one of the preceding. claims, **characterised in that** the second display is a display confirming the result of the first fluid level measurement.

16. Method according to one of the preceding claims, **characterised in that** the method is used in an internal combustion engine, more especially a diesel engine.

17. Method according to one of the preceding claims, **characterised in that** the internal combustion engine includes a waste gas return system.

## Revendications

1. Procédé pour vérifier le fonctionnement d'un capteur électronique de niveau pour la mesure du niveau d'huile dans les moteurs à combustion interne contenant des éléments en mouvement influençant le niveau d'huile ainsi qu'un système de recyclage des gaz d'échappement,
comportant les étapes de procédé suivantes :
a) réalisation d'une première mesure de niveau d'huile avant la mise en mouvement des éléments ;
b) mémorisation du résultat de la première mesure de niveau d'huile dans une mémoire de valeurs mesurées ;
c) mise en mouvement des éléments, en particulier démarrage du moteur ;
d) réalisation d'une deuxième mesure de niveau d'huile ;
e) comparaison électronique du résultat mémorisé de la première mesure de niveau d'huile avec le résultat de la deuxième mesure de niveau d'huile, évaluation électronique de la comparaison ;
f) activation d'un premier affichage indiquant un dysfonctionnement du capteur de niveau lorsque la différence de niveau déterminée entre la première et la deuxième mesure de niveau est inférieure ou n'est pas supérieure à une valeur configurable, ou activation d'un deuxième affichage indiquant un fonctionnement correct du capteur de niveau lorsque la différence de niveau est supérieure ou n'est pas inférieure à une valeur configurable.

2. Procédé selon la revendication 1,
**caractérisé par le fait**
**qu'**après la mise en mouvement des éléments, en particulier après le démarrage du moteur, un laps de temps configurable s'écoule avant la réalisation de la deuxième mesure de niveau de liquide.

3. Procédé selon la revendication 1 ou 2,
**caractérisé par le fait**
**que** l'on mémorise le résultat de la deuxième mesure de niveau de liquide dans la mémoire de valeurs mesurées.

4. Procédé selon l'une des revendications précédentes,
**caractérisé par le fait**
**que** l'on mémorise des séries de résultats de premières et deuxièmes mesures de niveau de liquide dans la mémoire de valeurs mesurées.

5. Procédé selon l'une des revendications précédentes,
**caractérisé par le fait**
**que** l'on mémorise des séries de valeurs de différence déterminées dans la mémoire de valeurs mesurées.

6. Procédé selon l'une des revendications précédentes,
**caractérisé par le fait**
**que** l'on visualise les séries de valeurs mesurées.

7. Procédé selon l'une des revendications précédentes,
**caractérisé par le fait**
**que** l'on saisit le temps d'arrêt des éléments en mouvement, en particulier du moteur à combustion interne, précédant la première mesure de niveau de liquide.

8. Procédé selon l'une des revendications précédentes,
**caractérisé par le fait**
**que** l'on saisit la température du liquide, en particulier de l'huile moteur.

9. Procédé selon l'une des revendications précédentes,
**caractérisé par le fait**
**que** l'on saisit la viscosité du liquide.

10. Procédé selon l'une des revendications précédentes,
**caractérisé par le fait**
**que** l'on saisit l'inclinaison du réservoir, en particulier du moteur à combustion interne.

11. Procédé selon l'une des revendications précédentes,
**caractérisé par le fait**
**que** l'on saisit la vitesse de mouvement, en particulier la vitesse de rotation des éléments en mouvement.

12. Procédé selon l'une des revendications précédentes,
**caractérisé par le fait**
**que** le laps de temps entre la première et la deuxième mesure de niveau dépend du temps d'arrêt et/ou de la température de l'huile moteur et/ou de la viscosité et/ou de l'inclinaison du réservoir et/ou de la vitesse des éléments en mouvement déterminés.

13. Procédé selon l'une des revendications précédentes,
**caractérisé par le fait**
**que** les étapes de procédé a) à f) sont contrôlées par un processeur.

14. Procédé selon l'une des revendications précédentes,
**caractérisé par le fait**
**que** le premier affichage est un affichage d'avertissement.

15. Procédé selon l'une des revendications précédentes,
**caractérisé par le fait**
**que** le deuxième affichage est un affichage confirmant le résultat de la première mesure de niveau de liquide.

16. Procédé selon l'une des revendications précédentes,
**caractérisé par le fait**
**que** le procédé est utilisé dans un moteur à combustion interne, en particulier un moteur diesel.

17. Procédé selon l'une des revendications précédentes,
**caractérisé par le fait**
**que** le moteur à combustion interne comprend un système de recyclage des gaz d'échappement.
